# EUROPÄISCHE PATENTSCHRIFT

(11) **EP 0 654 575 B1**
(45) Veröffentlichungstag und Bekanntmachung des Hinweises auf die Patenterteilung: **15.11.2000**
(21) Anmeldenummer: 94102652.8
(22) Anmeldetag: 22.02.1994
(51) Int. Cl.: E05F 15/00, H01H 3/14

(54) **Sicherheitskontaktschiene mit Schutzschicht**
Safety contact edge with protective coating
Rail de contact de sécurité avec une couche protective

(30) Priorität: 22.11.1993 DE 4339688
(43) Veröffentlichungstag der Anmeldung: 24.05.1995
(73) Patentinhaber: Beckhausen, Karlheinz, 50931 Köln (DE)
(72) Erfinder: Beckhausen, Karlheinz, 50931 Köln (DE)
(74) Vertreter: Nau, Walter, Dipl.-Ing.

(56) Entgegenhaltungen:
- EP-A- 0 353 332
- EP-A- 0 539 887
- DE-A- 4 029 929
- FR-A- 2 651 269

## Beschreibung

Die Erfindung betrifft eine Sicherheitskontaktschiene für kraftbetätigte Anlagen, wie Rolltore, Rollgitter usw. und Hebe-, Arbeitsbühnen und dergleichen sowie zur Absicherung von Maschinen oder Räumen gemäß dem Oberbegriff des Anspruchs 1, die als ein eine Befestigungsleiste und ein Mantelteil aufweisenden Gummihohlprofil ausgebildet ist, in dem ein Innenkörper vorgesehen ist, wobei der Innenkörper und das Mantelteil elektrisch leitende Zonen aufweisen, die bei gegenseitiger Berührung einen einer Auswerteinheit zuführbaren Schaltimplus auslösen.

Derartige Sicherheitskontaktschienen sind in verschiedenen Ausführungsformen bekannt.

Die dem Oberbegriff des Anspruchs 1 entsprechende DE-A- 40 29 929 bezieht sich auf die Ausgestaltung einer Sicherheits-Schutzleiste, die zweiteilig aufgebaut ist und einen verformbaren Tragkörper und eine daran oder darin befestigte Kontaktleiste aufweist. Die Kontaktleiste nach dieser Druckschrift entspricht der Sicherheitskontaktschiene nach der vorliegenden Erfindung. Es wird der Aufbau des Tragkörpers beschrieben und dabei auch erläutert, daß der **Tragkörper** zumindest teilweise mit Folie, insbesondere Glasfaserfolie, Metallfolie oder PVC-Folie umhüllt bzw. auch mit PU-Lack lackiert wird. Dies hat den Zweck, daß der **Tragkörper** sich nicht mit Flüssigkeit vollsaugen kann und je nach dem um welches Material es sich handelt, der **Tragkörper** unter Zuhilfenahme einer Folie auch besser an den Geräteteilen befestigt werden kann. Daß es sich dabei um ein Abdichten und ein Befestigen des Tragkörpers handelt, zeigt sich auch daran, daß unter anderem eine Metallfolie genannt ist, die sicherlich elektrisch leitend ist.

In einer Ausbildungsform nach der DE-OS 33 04 400 ist die elektrisch leitende Zone durch Beimischungen von leitfähigen Stoffen, z.B. Graphit in die Gummioberfläche, durch Auflage dünner Metallfolien oder Einlage dünner Metallnetze oder dergleichen oder durch Aufdampfen leitfähiger Stoffe gebildet. Diese Ausbildungen stellten zwar technische praktizierbare Lösungen zum Erzeugen einer leitenden Zone dar, die sich aber in der Praxis nicht durchsetzen konnten, da diese Ausbildung zu bauaufwendig, kompliziert und auch störanfällig war. Die einseitige Beschichtung der Oberfläche des Innenkörpers bzw. der damit ggfs. zusammenwirkenden inneren Oberfläche des Mantelteils war zu aufwendig und damit nur teuer herzustellen und darüberhinaus auch störanfällig, da sich die Beschichtung im Laufe der Betriebszeit ablösen konnte. Daher wurde in einer späteren Ausführungsform (EP- 0 353 332) der Innenkörper und das damit zusammenwirkende Mantelteil vollständig elektrisch leitend ausgebildet, wobei die Leitfähigkeit durch Beimischen von leitenden Stoffen, wie Ruß, Graphit, Metallpulver und dergleichen erfolgte. In dieser Ausführungsform wurden also nicht nur die jeweils zusammenwirkende Oberflächen beschichtet, sondern die ganzen Bauteile, also der Innenkörper und das Mantelteil in Form von elektrisch leitenden Zonen ausgebildet. Diese Ausführungsform hat sich in der Praxis bezüglich der Herstellungsaufwandes und der Betriebsssicherheit gegenüber der ersten Ausführungsform erheblich besser bewährt.

Der Erfindung liegt die Aufgabe zugrunde, eine derartige Sicherheitskontaktschiene noch weiter zu verbessern, wobei insbesondere die Betriebssicherheit noch weiter erhöht werden soll.

Diese Aufgabe wird gemäß Anspruch 1 dadurch gelöst, daß die elektrisch leitende Zone des Mantelteils mit einer elektrisch nicht leitenden äußeren Schutzschicht überzogen ist. Dieser Ausbildung liegt die Erkenntnis zugrunde, daß die Sicherheitskontaktschiene mit dem vollständig elektrisch leitenden ausgeführten Mantelteil zwar im Prinzip zuverlässig arbeitet, aber an der Oberfläche elektrisch leitend ist und so Spannungsverschleppungen auf nachgeschaltete Steuerungen möglich sind sowie das Mantelteil nicht ausgesprochen verschleißfest ausgebildet sein konnte und bei Beschädigungen durch eingedrungene Fremdkörper auch Fehlauslösungen eintreten konnten und dadurch ein Schaltimpuls ausgelöst wurde. Diese Beschädigungen wurden beispielsweise durch Verschmutzung des Mantelteils bewirkt (Versprödung). Daher ist eine ständige Pflege und Reinigung derartiger Sicherheitskontaktschienen erforderlich. Bei einem Überzug der elektrisch leitenden Zone des Mantelteils mit einer elektrisch nicht leitenden äußeren Schutzschicht ist diese Fehlerquelle ausgeschaltet. Dabei kann die Schutzschicht ganz gezielt so ausgebildet sein, daß sie gegen bestimmte Einflüsse, wie beispielsweise bestimmte aggressive Säuren oder Laugen beständig ist, so daß die Sicherheitskontaktschiene auch bei Vorhandensein von derartigen aggressiven Medien eingesetzt werden kann. Wird die Sicherheitskontaktschiene beispielsweise in Räumen benutzt, in denen scharfkantige Gegenstände vorhanden sind, kann die erfindungsgemäße Schutzschicht besonders widerstandsfähig gegen mechanische Beschädigungen ausgebildet sein. Insgesamt ist es durch die erfindungsgemäße Schutzschicht möglich, die Sicherheitskontaktschiene auf ganz bestimmte Anwendungsfälle hin besonders widerstandsfähig auszubilden.

Dadurch daß die gesamte elektrisch leitende Zone der Mantelfläche mit einer Schutzschicht umfaßt wird, ist ein Schutz gegen alle möglichen Beschädigungen oder Fehlauslösungen sicher gewährleistet. Die Schutzschicht reicht bis auf die bis Befestigungsleiste hinauf. Damit ist sichergestellt, daß die gesamte elektrische Zone vollständig abgedeckt ist und auch an den Übergangsstellen von der elektrisch leitenden Zone zu der Befestigungsleiste keine Schwachstellen auftreten können.

Nach der Erfindung wird die Schutzschicht einstückig mit dem Mantelteil extrudiert. Mit heute üblichen und verfügbaren Extrudern ist es möglich, unterschiedliche Materialkomponenten in einer beliebig gewünschten Art und Weise beziehungsweise Zusammensetzung zu einem Formteil, wie einer Sicherheitskontaktschiene zu vereinigen. Gerade diese Herstellungsmethode bietet sich für die Sicherheitskontaktschiene gemäß der vorliegenden Erfindung an, da mit einem derartigen Ertruder durch die Variation, insbesondere des Schutzschichtbasisstoffes eine leichte Anpassung an gewünschte Erfodernisse bezüglich der Schutzschicht (Säurefestigkeit, mechanische Festigkeit) einstellbar ist.

In Weiterbildung der Erfindung beträgt die Dicke der Schutzschicht 0,1 mm bis 1,5 mm, vorzugsweise 0,3 mm bis 0,5 mm. Es hat sich herausgestellt, daß für die meisten Anwendungsfälle die in dem vorzugsweise genannten Bereich ausgebildete Schutzschicht hinreichend widerstandsfähig ist. Selbstverständlich kann für ganz besondere Anwendungsfälle auch über den angegebenen Wertebereich hinaus die Schutzschicht dünner oder dicker ausgebildet sein.

In Weiterbildung der Erfindung ist der Innenkörper eine schneidenartige Rippe, die einstückig mit der Befestigungsleiste und dem Mantelteil hergestellt ist. Hierzu bietet sich wiederum insbesondere das Herstellungsverfahren durch Extrudieren an. Die Ausbildung des Innenkörpers als schneidenartige Rippe hat sich als besonders günstig herausgestellt, da damit eine Sicherheitskontaktschiene hergestellt und bereitgestellt werden kann, die unempfindlich bei der Montage ist, preisgünstig hergestellt werden kann und darüberhinaus auch starke Biegungen ohne eine Gefahr von Beschädigungen zuläßt.

In Weiterbildung der Erfindung ist in zumindest eine der elektrisch leitenden Zone zumindest eine elektrisch leitende Litze eingelassen. Diese Litzen dienen zur sicheren Übertragung der elektrischen Schaltimpulse auch über lange Entfernungen innerhalb der Sicherheitskontaktschiene bzw. der einzelnen Sicherheitskontaktschienenelemente. Darüberhinaus bewirken die Litzen auch eine zusätzliche Stabilisierung bzw. Versteifung der Sicherheitskontaktschiene in den Bereichen, die nicht eleastisch verformbar sein müssen.

In Weiterbildung der Erfindung ist die Litze in einem Bereich einer erweiterten Querschnittsfläche der elektrisch leitenden Zone angeordnet. Damit ist sichergestellt, daß der elektrische Widerstand entlang der Sicherheitskontaktschiene durch die große Querschnittsfläche im Bereich der durchlaufenden Litze gering ist. Damit können ohne weiteres auch lange Sicherheitskontaktschienen realisiert werden. Selbst wenn keine Litze eingesetzt wird, ist durch diese Ausbildung gegenüber bekannten Sicherheitskontakschienen der elektrische Widerstand bei gleich langen Elementen geringer und damit eine höhere Betriebssicherheit gegeben.

In Weiterbildung der Erfindung ist die Litze in einem die Litze aufnehmenden Kanal in den elektrisch leitenden Zonen verschiebbar und/oder herausnehmbar. Ein Verschieben der Litze ist insbesondere zum Einsetzen von den in Weiterbildung der Erfindung vorgesehenen Nadelkontaktstiften, beispielsweise zur Verbindung von Sicherheitskontaktschienenelementen, vorteilhaft. In diesem Fall wird die Litze um einen geringen Betrag, der beispielsweise der halben Länge des einzuschiebenden Nadelkontaktstiftes entspricht, zurückgeschoben, so daß der Nadelkontaktstift leicht eingeführt werden kann und mit einer Teillänge eine darüberhinaus gute elektrische Verbindung mit der Litze eingeht. Dieses Zurückschieben kann im übrigen in der Art erfolgen, daß das Sicherheitskontaktschienenelement in seinem Endbereich durch Auseinanderziehen geringfügig elastisch gelängt wird, wodurch die Litze in Kanälen der elektrisch leitenden Zone geringfügig zurückbleibt. Wird die Längung des Sicherheitskontaktschienenelementes wieder aufgehoben, so verbleibt die Litze in ihrer Position, da die einzelnen feinen Drähte der Litze sich um das zurückgehende Längenmaß stauchen. Alternativ ist die Litze aus dem Kanal gänzlich herausnehmbar. Die Herausnahme verfolgt insbesondere zur Herstellung von insbesondere Winkelstücken für die Sicherheitskontaktschiene. Dazu werden von einem Sicherheitskontaktschienenelement beispielsweise zwei kurze Teillängen abgeschnitten, die beispielsweise zur Erzeugung eines 90°-Winkelstückes an ihren Enden mit 45°-Schnitten versehen werden, und die zusammengesetzt den 90°-Winkel erzeugen. Aus diesen kurzen Sicherheitskontaktschienenabschnitten wird die Litze herausgenommen und stattdessen von der abgeschrägten Seite her ein einziger entsprechend dem zu vorgegebenen Winkel aufgebogener Nadelkontaktstift durch die Kanäle der beiden Abschnitte durchgeschoben. Dabei weisen die Nadelkontaktstifte eine solche Länge auf, daß sie noch um einen Teilbereich aus den Abschnitten herausragen. Die Sicherheitskontaktschienen können an ihren Stoßkanten zusätzlich verklebt werden. Im übrigen bieten diese so gefertigten Winkelstücke den Vorteil auf, daß auch in diesen Eckbereichen Schaltimpulse ausgelöst werden, wenn die Sicherheitskontaktschiene in diesem Bereich auf ein Hindernis trifft. Diese durch die erfindungsgemäße Ausgestaltung ermöglichte Schaltfunktion in diesen Winkelstücken stellt gegenüber dem Stand der Technik, bei dem eine derartige Schaltfunktion nicht gegeben war, eine wesentliche Verbesserung dar.

In Weiterbildung der Erfindung ist der Durchmesser der Nadelkontaktstifte und der Litze annähernd gleich. Dadurch lassen sich die Nadelkontaktstifte problemlos in die die Litze aufnehmenden Kanäle der elektrisch leitenden Zone einschieben. Dabei sind die Nadelkontaktstifte vorzugsweise aus einem korrosionsbeständigem Material, wie beispielsweise Nirosta, V2A oder V4A gefertigt. Die Sicherheitskontaktschiene bzw. die Sicherheitskontaktschienenelemente sind in ihren Endbereichen durch Endstücke verschließbar, an die ggfs. ein Anschlußkabel oder aber elektrische bzw. elektronische Bauteile angeschlossen werden. So kann beispielsweise eine Sperrdiode oder ein Widerstand, die/der für bestimmte Schaltanwendungen benötigt werden, angeschlossen werden. Dabei können selbstverständlich auch die elektrischen bzw. elektronischen Bauteile und zusätzlich das Anschlußkabel an ein Endstück angeschlossen bzw. integriert sein. Es ist aber auch vorgesehen, solche Endstücke ohne jegliche zusätzliche Funktionen bereitzustellen und vorzusehen. Zu bemerken ist, daß die Herstellung von Eck- und Endstücken sowie der Einsatz von den Nadelkontaktstiften nicht allein auf die hier beschriebene Sicherheitskontaktschiene mit einer Schutzschicht über dem Mantelteil beschränkt ist.

Im folgenden wird die Erfindung anhand von in der Zeichnung dargestellten Ausführungsbeispielen der Erfindung näher beschrieben.

Es zeigen:
Fig. 1 einen Schnitt durch die Sicherheitskontaktschiene mit Schutz- schicht
Fig. 2 eine stirnseitige Draufsicht auf ein Sicherheitskontaktschienen-element,
Fig. 3 ein Winkelstück mit einem seitig angeordneten Träger,
Fig. 4 ein Winkelstück mit einem stirnseitig angeordneten Träger und
Fig.5 ein Anschlußendstück.

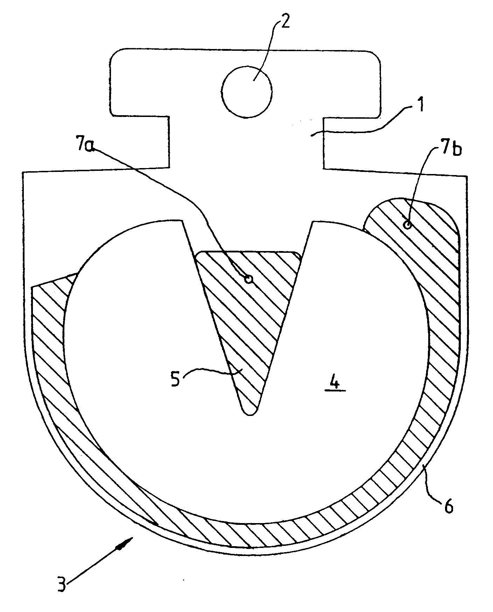

Die Figur 1 zeigt einen Schnitt durch die erfindungsgemäße Sicherheitskontaktschiene. Diese weist eine Befestigungsleiste 1 auf, die im wesentlichen T-förmig ausgebildet ist. Mit dieser Befestigungsleiste 1 wird die Sicherheitskontaktschiene in entsprechende Ausnehmungen, beispielsweise an Rolltoren, eingeschoben. In die Befestigungsleiste 1 ist eine durchgehende Öffnung 2 eingelassen, in die ggfs. ein Verstärkungskabel oder aber auch alternativ oder zusätzlich Schaltleitungen eingezogen werden können. An die Befestigungsleiste 1 schließt ein Mantelteil 3 an, das einen Hohlraum 4 bildet, in dem ein Innenkörper angeordnet ist, der als schneidenartige Rippe 5 ausgebildet ist.

Die schraffierten Flächen der schneidenartigen Rippe 5 und des Mantelteils 3 sind aus einem elektrisch leitenden Material hergestellt, während die Befestigungsleiste 1 aus einem nicht leitenden Material hergestellt ist. Das Mantelteil 3 ist mit einer äußeren Schutzschicht 6 überzogen. Diese Schutzschicht 6 ist in dem Ausführungsbeispiel aus dem gleichen Material wie die Befestigungsleiste 1 hergestellt und geht nahtlos in diese über. Eine Sicherheitskontaktschiene läßt sich vorteilhaft mit einem Extruder fertigen, mit dem es möglich ist, das Mantelteil 3 einstückig und fest verbunden mit der Schutzschicht herzustellen aber gleichzeitig die Dicke der Schutzschicht 6 so zu bemessen, daß diese vorzugsweise 0,3 mm bis 0,5 mm beträgt.

In erweiterte Bereiche der schneidenartige Rippe 5 und des Mantelteils 3 sind Kanäle 7a, 7b eingelassen, in die eine elektrisch leitende Litze eingelassen ist. Diese elektrische leitende Litze dient zur sicheren Signalübertragung auch über lange Entfernungen innerhalb der Sicherheitskontaktschiene. Desweiteren können in die Kanäle 7a, 7b eines Sicherheitskontaktschienenelements auch Nadelkontaktstifte zum Verbinden von einzelnen Elementen und zur Herstellung von Winkel- und Endstücken eingesetzt werden.

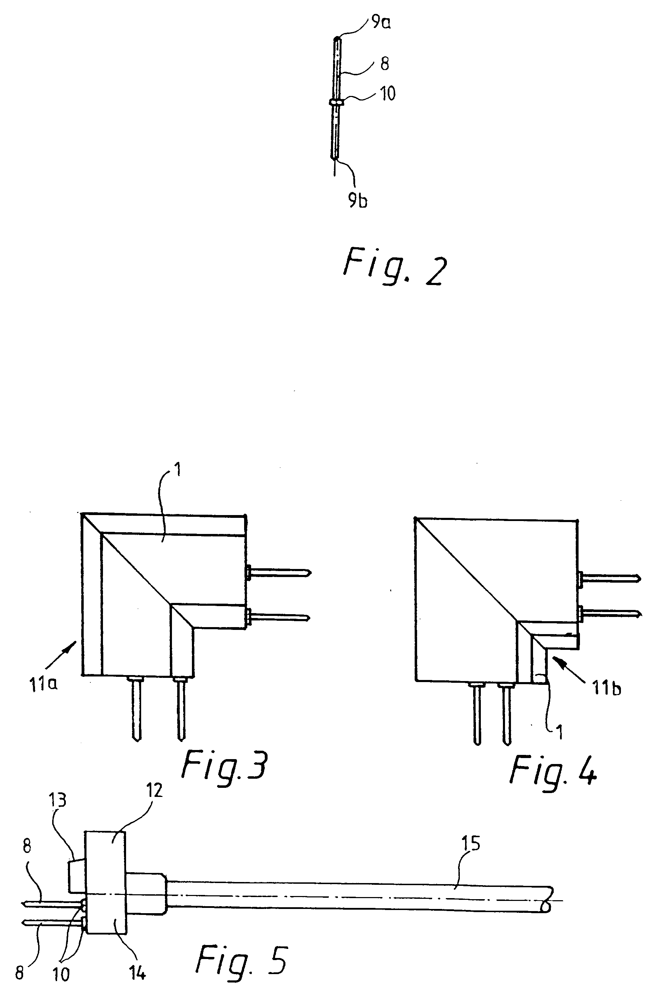

Der Nadelkontaktstift 8 nach Fig. 2 weist zwei Nadelspitzen 9a, 9b auf, die einander gegenüber liegen. In der Mitte des Nadelkontaktstiftes 8 ist ein umlaufender Ringsteg 10 angeordnet. Dieser Ringsteg 10 stellt einen Anschlag dar, bis zu dem der Nadelkontaktstift 8 in die Kanäle 7a, 7b der elektrisch leitenden Zone (Fig. 1) eingeschiebbar ist.

Die Fig. 3 und 4 zeigen Winkelstücke 11a, 11b einer Sicherheitskontaktschiene, die sich prinzipiell nur durch die Anordnung der Befestigungsleiste 1 unterscheiden. Bei dem Winkelkontaktstück 11a nach Fig. 3 ist die Befestigungsleiste 1 stirnseitig angeordnet, während bei dem Winkelstück 11b nach Fig. 4 die Befestigungsleiste 1 seitlich angeordnet ist. Dadurch lassen sich je nach gewünschtem Verwendungszweck unterschiedliche Anordnungen von der Sicherheitskontaktschiene im Eckbereich von abzusichernden Gegenständen herstellen.

Das Anschlußendstück 12, das als Anschlußstecker ausgebildet ist, nach Fig. 5 weist ein Haltestück 13 auf, in das Nadelkontaktstifte 8 eingesetzt sind. Diese Nadelkontaktstifte können beispielsweise durch Ablängen des Nadelkontaktstiftes 8 aus Fig. 2 leicht hergestellt werden. Das Haltestück 13 ist auf der Seite, auf der die Nadelkontaktstifte 8 nicht oder nur geringfügig herausragen mit einer Abdeckkappe 14 versehen, aus der das Anschlußkabel 15 herausragt. Das Anschlußkabel 15 ist durch eine abdichtbare Öffnung in die Abdeckkappe 14 eingeführt und innerhalb der Abdeckkappe 14 sind die in dem Anschlußkabel 15 befindlichen Leitungen mit den Nadelkontaktstiften 8 elektrisch leitend verbunden. In gleicher Weise können in der Abdeckkappe 14, die in einer alternativen Ausführung auch ohne Öffnung für ein Anschlußkabel 15 ausgebildet sein kann, elektrische Funktionsteile, beispielsweise eine Sperrdiode oder ein Widerstand angeordnet sein, die ebenfalls mit den Nadelkontaktstiften 8 verbindbar sind.

Im übrigen weisen die Nadelkontaktstifte 8 eine Länge von ca. 30 mm und einen Durchmesser von ca. 1,5 mm auf und laufen konisch zum Ringsteg 10 zu. Im Bereich des Ringsteges 10 weisen sie einen Durchmesser von ca. 2,5 mm auf.

## Patentansprüche

1. Sicherheitskontaktschiene für kraftbetätigte Anlagen, wie Rolltore, Rollgitter usw., und Hebe-, Arbeitsbühnen und dergleichen sowie zur Absicherung von Maschinen oder Räumen mit einem eine Befestigungsleiste (1) und ein Mantelteil (3) aufweisenden Gummihohlprofil, wobei die Befestigungsleiste (1) aus einem elektrisch nicht leitenden Material hergestellt und in dem Gummihohlprofil ein Innenkörper vorgesehen ist und wobei der Innenkörper und das Mantelteil (3) elektrisch leitende Zonen aufweisen, die bei gegenseitiger Berührung einen einer Auswerteeinheit zuführbaren Schaltimpuls auslösen und wobei die äußere Oberfläche des der gesamten elektrisch leitenden Zone entsprechenden Teils des Mantelteils (3) mit einem Überzug versehen ist,
***dadurch gekennzeichnet, daß*** der Überzug als elektrisch nicht leitende Schutzschicht (6) ausgebildet ist, daß die Schutzschicht (6) von der Befestigungsleiste (1) ausgehend und nahtlos an diese anschließend die gesamte elektrisch leitende Zone des Mantelteils (3) umfaßt und daß die Schutzschicht (6) aus dem gleichen Material wie die Befestigungsleiste (1) hergestellt und einstückig mit der Befestigungsleiste (1) und mit dem Mantelteil (3) extrudiert ist.

2. Sicherheitskontaktschiene nach Anspruch 1,
***dadurch gekennzeichnet, daß*** die Dicke der Schutzschicht (6) 0,1 bis 1,5 mm, vorzugsweise 0,3 bis 0,5 mm beträgt.

3. Sicherheitskontaktschiene nach einem der vorhergehenden Ansprüche,
***dadurch gekennzeichnet, daß*** der Innenkörper eine schneidenartige Rippe (5) ist, die einstückig mit der Befestigungsleiste (1) und dem Mantelteil (3) hergestellt ist.

4. Sicherheitskontaktschiene nach einem der vorhergehenden Ansprüche,
***dadurch gekennzeichnet, daß*** in zumindest eine der elektrisch leitenden Zone zumindest eine elektrisch leitende Litze eingelassen ist.

5. Sicherheitskontaktschiene nach Anspruch 4,
***dadurch gekennzeichnet, daß*** die Litze in einem Bereich einer erweiterten Querschnittsfläche der elektrisch leitenden Zone angeordnet ist.

## Claims

1. A safety contact edge for power operated installations, such as roller doors, roller gratings etc., and elevating platforms, work platforms and the like and for the securing of machines or spaces with a fastening web (1) and a hollow rubber profile having a cover part (3) whereby the fastening web (1) is produced from an electrically non-conducting material and in the hollow rubber profile an inner body is provided and whereby the inner body and the cover part (3) have electrically conducting zones, which when they touch each other initiate a switching pulse which can be taken to an evaluating unit and whereby the outer surface of the part of the cover part (3) corresponding to the whole of the electrically conducting zone is provided with an overlay,
***characterised in that*** the overlay is formed as an electrically non-conducting protective layer (6), that the protective layer starting from the fastening web (1) and seamlessly attached to it encompasses the whole of the electrically conducting zone of the cover part (3) and that the protective layer (6) is produced from the same material as the fastening web (1) and is extruded as one piece with the fastening web (1) and with the cover part (3).

2. A safety contact edge according to claim 1,
***characterised in that*** the thickness of the protective layer (6) amounts to 0.1 to 1.5 mm, preferably 0.3 to 0.5 mm.

3. A safety contact edge according to any preceding claim,
***characterised in that*** the inner body is a knife-like rib, which is produced as one piece with the fastening web (1) and the cover part (3).

4. A safety contact edge according to any preceding claim,
***characterised in that*** in at least one of the electrically conducting zones at least one electrically conducting braid is set in.

5. A safety contact edge according to claim 4,
***characterised in that*** the braid is arranged in a region of an extended cross sectional surface of the electrically conducting zone.

## Revendications

1. Rail de contact de sécurité pour des installations actionnées par des moteurs, telles que des portes ou des grilles roulantes ou autres, des plates-formes de levage ou de travail ou analogues, et également pour sécuriser des machines ou des espaces, équipé d'un profilé creux en caoutchouc comprenant une barrette de fixation (1) et une enveloppe (3), la barrette(1) étant faite d'un matériau non conducteur de l'électricité tandis que le profilé en caoutchouc contient un corps interne, celui-ci et l'enveloppe (3) comportant des zones conductrices de l'électricité dont la venue en contact réciproque déclenche une impulsion de commande qui peut être adressée à une unité d'exploitation, et la surface externe de la partie de l'enveloppe (3) correspondant à toute la zone conductrice est pourvue d'un revêtement,
caractérisé en ce que
le revêtement est constitué d'une couche de protection (6) non conductrice de l'électricité, partant de la barrette de fixation (1) et se poursuivant sans discontinuité pour venir entourer toute la zone conductrice de l'enveloppe (3), la couche (6) faite du même matériau que la barrette de fixation (1) étant réalisée monobloc avec la barrette (1) et l'enveloppe (3) par extrusion.

2. Rail de contact de sécurité selon la revendication 1,
caractérisé en ce que
l'épaisseur de la couche de protection (6) est comprise entre 0,1 et 1,5 mm, de préférence entre 0,3 et 0,5 mm.

3. Rail de contact de sécurité selon l'une des revendications précédentes,
caractérisé en ce que
le corps interne est une nervure (5) en forme de couteau, réalisée monobloc avec la barrette de fixation (1) et l'enveloppe (3).

4. Rail de contact de sécurité selon l'une des revendications précédentes,
caractérisé en ce que
un cordon conducteur de l'électricité est inséré dans au moins une zone conductrice de l'électricité.

5. Rail de contact de sécurité selon la revendication 4,
caractérisé en ce que
le cordon est disposé dans une zone à section élargie de la zone conductrice de l'électricité.
